# EUROPEAN PATENT APPLICATION

(11) **EP 2 631 833 A1**
(43) Date of publication of application: **28.08.2013**
(21) Application number: 11847830.4
(22) Date of filing: 01.12.2011
(51) Int. Cl.: G06F 21/00

(54) **METHOD, DEVICE AND SYSTEM FOR VERIFYING BINDING DATA CARD AND MOBILE HOST**

(30) Priority: 07.12.2010 CN 201010576880
(71) Applicant: Huawei Device Co., Ltd., Shenzhen, Guangdong 518129 (CN)
(72) Inventor: WANG, Xing, Shenzhen Guangdong 518129 (CN)
(74) Representative: Isarpatent
(86) International application number: PCT/CN2011/083279
(87) International publication number: WO 2012/075904

(57) **Abstract**

Embodiments of the present invention provide a method, an apparatus, and a system for performing authentication on a bound data card. The method includes: receiving identifier information sent by a mobile host, where the identifier information is used to identify products of the same model or the same batch and is located in an OEM information area of a basic input output system in the mobile host; determining whether the identifier information is consistent with identifier information in data card software; and if the identifier information is consistent with the identifier information in the data card software, succeeding in the authentication on the data card. In embodiments of the present invention, when a data card is used, the data card does not need to send a binding request to a specified using device, but performs authentication directly by determining whether identifier information sent by a mobile host is consistent with identifier information in the data card. Because the identifier information in embodiments of the present invention can be used to identify products of the same model or the same batch, the binding between the data card and multiple mobile hosts of the same model or the same batch is implemented.

## Description

### FIELD OF THE INVENTION

The present invention relates to the field of data security, and in particular, to a method, an apparatus, and a system for performing authentication on a bound data card and a mobile host.

### BACKGROUND OF THE INVENTION

Currently, with the development of wireless technologies, mobile hosts without Internet access functions can perform wireless Internet access by using a data card (Internet access card). However, during the market expansion of some data card products, an operator needs to bind a data card to a mobile host of a model sold by the operator, that is, the data card can work only on a mobile host of a specified model to which the data card is bound, and cannot work normally on mobile hosts other than those provided by the operator.

In the prior art, the binding between a data card and a using device is generally implemented by using the following mode: When the binding activation function of the using device is checked, the data card sends a binding request to the using device; the data card receives a binding identifier sent by the using device, where the binding identifier is stored on the using device; and the data card stores the binding identifier sent by the using device in a binding file. When the data card is used once again, the using device sends the stored binding identifier to the data card. The using device is allowed to use the data card only when the data card detects that the binding identifier sent by the using device is consistent with the binding identifier stored in the binding file.

According to the prior art, when the data card is bound to the using device, the binding is performed in a one-to-one mode. To be specific, the data card sends a binding request to the using device; the using device sends a binding identifier to the data card; and the data card stores the binding identifier. In this way, the one-to-one binding is implemented.

However, the operator hopes that the data card can be bound to multiple devices of a specified model or a specified batch because the devices of the specified model or the specified batch are generally sold by the same operator, but the prior art cannot meet the foregoing requirements of the operator, that is, the prior art cannot implement the binding between the data card and multiple devices of a specified model or a specified batch.

### SUMMARY OF THE INVENTION

Embodiments of the present invention provide a method, an apparatus, and a system for binding a data card to a mobile host to implement binding between a data card and multiple devices of a specified model or a specified batch.

In one aspect, an embodiment of the present invention provides a method for performing authentication on a bound data card

. The method includes: receiving identifier information sent by a mobile host, where the identifier information is used to identify products of the same model or the same batch and is located in an OEM information area of a basic input output system (Basic Input Output System, BIOS) in the mobile host; determining whether the identifier information is consistent with identifier information in data card software; and if the identifier information is consistent with the identifier information in the data card software, succeeding in the authentication on the data card.

In another aspect, an embodiment of the present invention provides an apparatus for performing authentication on a bound data card, including: a receiving unit, configured to receive identifier information sent by a mobile host, where the identifier information is used to identify products of the same model or the same batch and is located in an OEM information area of a BIOS in the mobile host; and an authentication unit, configured to determine whether the identifier information is consistent with identifier information in data card software; and if the identifier information is consistent with the identifier information in the data card software, succeed in the authentication on the data card.

In another aspect, an embodiment of the present invention provides a system for performing authentication on a bound data card, including a data card and a mobile host. Identifier information used to identify products of the same model or the same batch is included in an OEM information area of the BIOS in the mobile host, and the data card includes the foregoing apparatus.

In embodiments of the present invention, when a data card is used, the data card does not need to send a binding request to a specified using device, but performs authentication directly by determining whether identifier information sent by a mobile host is consistent with identifier information in the data card. Because the identifier information in embodiments of the present invention can be used to identify products of the same model or the same batch, the binding between the data card and multiple mobile hosts of the same model or the same batch is implemented.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG 1 is a schematic flowchart of a method for performing authentication on a bound data card according to an embodiment of the present invention;

FIG. 2 is another schematic flowchart of a method for performing authentication on a bound data card according to an embodiment of the present invention;

FIG. 3 is a schematic structural diagram of an apparatus for performing authentication on a bound data card according to an embodiment of the present invention;

FIG. 4 is another schematic structural diagram of an apparatus for performing authentication on a bound data card according to an embodiment of the present invention; and

FIG. 5 is a schematic structural diagram of a system for performing authentication on a bound data card according to an embodiment of the present invention.

### DETAILED DESCRIPTION OF THE EMBODIMENTS

To make the objective, technical solutions, and advantages of the present invention more comprehensible, the following describes the present invention in detail with reference to the embodiments and the accompanying drawings. The exemplary embodiments of the present invention and descriptions thereof are used to explain the present invention, but are not intended to limit the present invention.

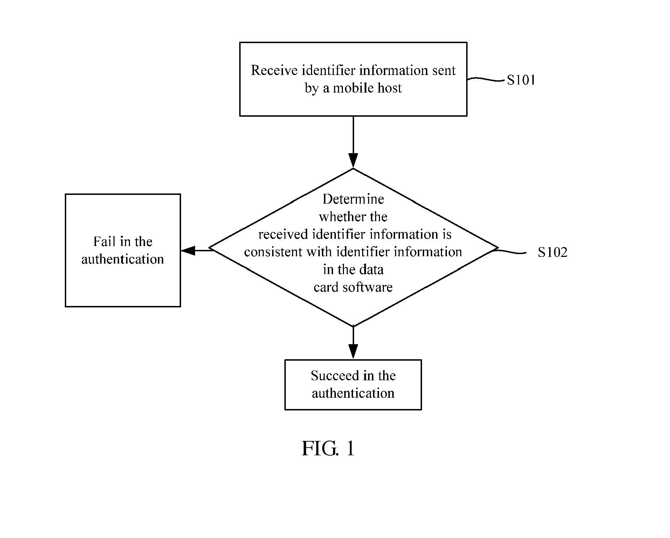

FIG. 1 is a schematic flowchart of a method for performing authentication on a bound data card according to an embodiment of the present invention. In this embodiment, the present invention is described from the perspective of the data card. The method includes the following:

S101: Receive identifier information sent by a mobile host, where the identifier information is used to identify products of the same model or the same batch and is located in an OEM information area of the BIOS in the mobile host.

The identifier information may consist of a string of number sequences or English models, or a combination thereof, which is not specifically limited by the embodiment of the present invention. The mobile host herein may be a device that does not have Internet access functions but can access the Internet by connecting to the data card through a USB, for example, a wireless gateway, a notebook, a tablet computer, and the like.

In this embodiment, the identifier information may be written into the OEM information area of the BIOS in the mobile host before the mobile host is delivered from the factory. In this way, when authentication is performed on the data card subsequently, the identifier information needs to be read from only the OEM information area of the BIOS by using a background program in the mobile host.

In this embodiment of the present invention, when the data card is inserted into the mobile host, the mobile host detects that the data card is inserted, and then sends encrypted identifier information to the data card, for example, the mobile host triggers, according to a detection signal, a background program to read identifier information from the OEM information area of the BIOS, and sends the identifier information to the data card.

According to an embodiment of the present invention, when the data card is inserted into the mobile host, the data card may also send an authentication request to the mobile host; after receiving the authentication request, the mobile host sends encrypted identifier information to the data card.

S102: Determine whether the received identifier information is consistent with identifier information in the data card software; if the received identifier information is consistent with identifier information in the data card software, succeed in the authentication on the data card; otherwise, forbid the use of the data card. If the authentication on the data card succeeds, a user can use all or some functions of the data card; if the authentication on the data card fails, the user is forbidden to use all or some functions of the data card.

In this embodiment of the present invention, before the data card software is delivered from the factory, identifier information is also written to the data card software, so that when authentication is performed on the data card, only mobile hosts having the identifier information can normally use a service function of the data card. In this way, the data card is bound to the mobile hosts having the identifier information, that is, the data card is bound to mobile hosts of the same model or the same batch.

According to an embodiment of the present invention, the identifier information sent by the mobile host may be encrypted to prevent from being cracked, that is, a background program of the mobile host can encrypt the identifier information by using various encryption algorithms, for example, an advanced encryption standard (Advanced Encryption Standard, AES) algorithm, an RSA encryption algorithm, and the like. Certainly, if the mobile host encrypts the identifier information, the data card performs decryption by using a corresponding key after receiving the identifier information.

In this embodiment of the present invention, when a data card is used, the data card does not need to send a binding request to a specified using device, but performs authentication directly by determining whether identifier information sent by a mobile host is consistent with identifier information in the data card. Because the identifier information in this embodiment of the present invention can be used to identify products of the same model or the same batch, the binding between the data card and multiple mobile hosts of the same model or the same batch is implemented.

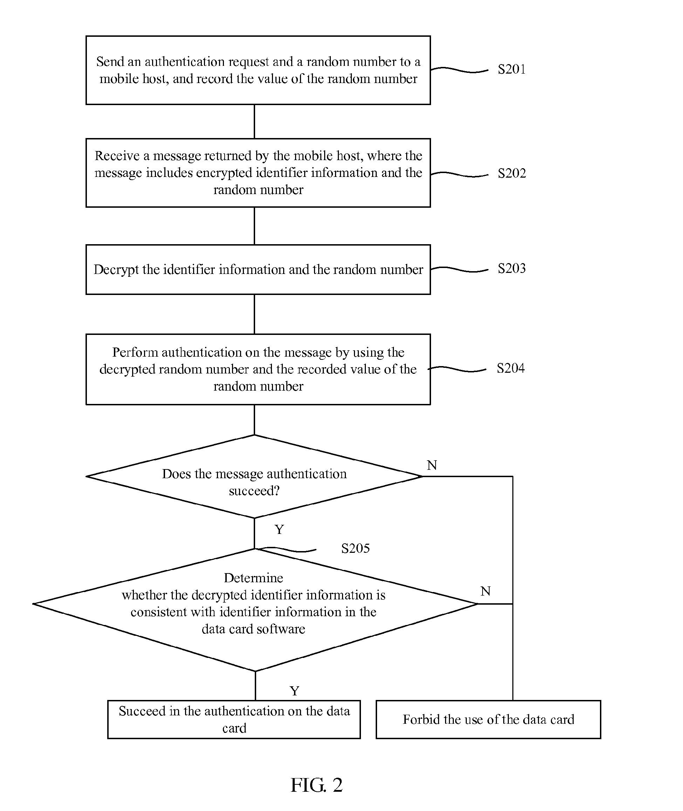

FIG. 2 is another schematic flowchart of a method for performing authentication on a bound data card according to an embodiment of the present invention. The method includes the following:

S201: Send an authentication request and a random number to a mobile host, and record the value of the random number.

In this embodiment of the present invention, to further ensure the security of using the data card, when the data card is inserted into the mobile host, the data card sends, to the mobile host, a random number in addition to an authentication request, where the random number may be used in subsequent message authentication.

Certainly, in this embodiment of the present invention, after the data card is inserted into the mobile host, the data card may also send the random number passively according to a request of the mobile host.

In an embodiment of the present invention, according to actual needs, before sending an authentication request, the data card may disable all or some service functions of the data card, and then enable corresponding service functions according to a final authentication result.

S202: Receive a message returned by the mobile host, where the message includes encrypted identifier information and the random number.

After receiving the authentication request, the mobile host encrypts the identifier information and the random number that are sent by the data card, and then sends the identifier information and the random number to the data card in the form of a message. Certainly, the mobile host can encrypt the identifier information and the random number together or encrypt the identifier information and the random number separately.

S203: Decrypt the encrypted identifier information and the random number. The data card decrypts the identifier information and the random number by using a corresponding key. Because various encryption algorithms can be used for encryption, the key herein only needs to correspond to an encryption algorithm. As mentioned above, if the mobile host encrypts the identifier information and the random number together, the data card needs to perform decryption only once. If the mobile host encrypts the identifier information and the random number separately, the data card needs to perform decryption twice.

S204: Perform authentication on the message by using the decrypted random number and the recorded value of the random number.

In this embodiment, after finishing the decryption, the data card firstly compares the decrypted random number with the random number recorded in step S201 to perform authentication on the message, so as to ensure that the message is not a dummy message. If the message authentication succeeds, step S205 is performed; otherwise, the mobile host is forbidden to use all or some functions of the data card.

S205: Determine whether the decrypted identifier information is consistent with identifier information in the data card software; if the decrypted identifier information is consistent with identifier information in the data card software, succeed in the authentication on the data card, and allow the mobile host to use related functions of the data card; otherwise, forbid the mobile host to use all or some functions of the data card.

In this embodiment of the present invention, when a data card is used, the data card does not need to send a binding request to a specified using device, but performs authentication directly by determining whether identifier information sent by a mobile host is consistent with identifier information in the data card. Because the identifier information in this embodiment of the present invention can be used to identify products of the same model or the same batch, the binding between the data card and multiple mobile hosts of the same model or the same batch is implemented. In addition, when the data card is used, the random number and the identifier information need to be matched in sequence, so that the information in the data card has a higher security level.

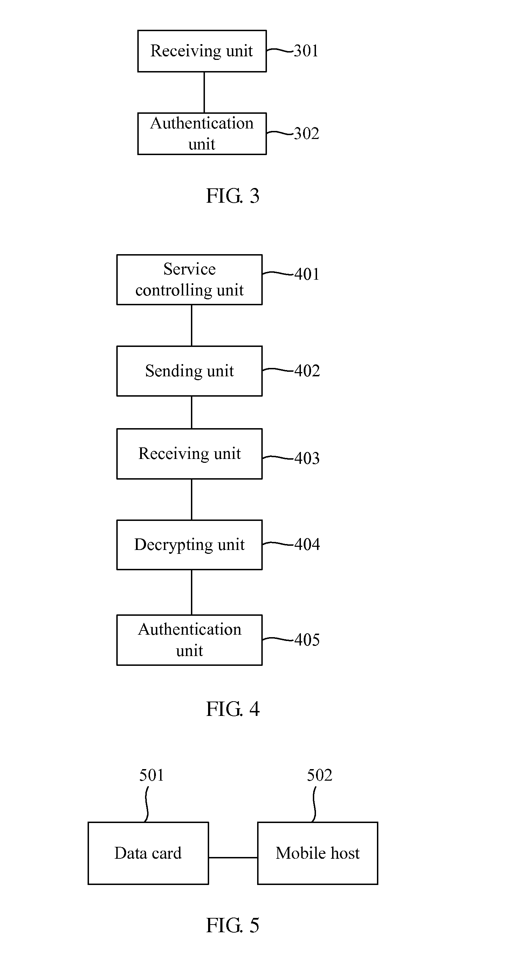

FIG. 3 is a schematic structural diagram of an apparatus for performing authentication on a bound data card according to an embodiment of the present invention. The apparatus includes a receiving unit 301 and an authentication unit 302, where the receiving unit 301 and the authentication unit 302 are interconnected.

The receiving unit 301 is configured to receive identifier information sent by a mobile host, where the identifier information is used to identify products of the same model or the same batch and is located in an OEM information area of the BIOS in the mobile host.

The identifier information may consist of a string of number sequences or English models, or a combination thereof, which is not specifically limited by the embodiment of the present invention. The mobile host herein may be a device that does not have Internet access functions but can access the Internet by connecting to the data card through a USB, for example, a wireless gateway, a netbook, a tablet computer, and the like.

In this embodiment, the identifier information may be written into the OEM information area of the BIOS in the mobile host before the mobile host is delivered from the factory. In this way, when authentication is performed on the data card subsequently, the identifier information only needs to be read from the OEM information area of the BIOS by using a background program in the mobile host.

In this embodiment of the present invention, when the data card is inserted into the mobile host, the mobile host detects that the data card is inserted, and then sends encrypted identifier information to the receiving unit 301, for example, the mobile host triggers, according to a detection signal, a background program to read identifier information sent by the OEM information area of the BIOS, and sends the identifier information to the receiving unit 301.

According to an embodiment of the present invention, the apparatus may further include a sending unit configured to send an authentication request to the mobile host when the data card is inserted into the mobile host. After receiving the authentication request, the mobile host sends encrypted identifier information to the receiving unit 301.

The authentication unit 302 is configured to determine whether the identifier information received by the receiving unit 301 is consistent with identifier information in the data card software; if the received identifier information is consistent with the identifier information in the data card software, succeed in the authentication on the data card; otherwise, forbid the use of the data card. If the authentication on the data card succeeds, a user can use all or some functions of the data card; if the authentication on the data card fails, the user is forbidden to use all or some functions of the data card.

In this embodiment of the present invention, before the data card software is delivered from the factory, identifier information is also written to the data card software, so that when authentication is performed on the data card, only mobile hosts having the identifier information can normally use a service function of the data card. In this way, the data card is bound to the mobile hosts having the identifier information, that is, the data card is bound to mobile hosts of the same model or the same batch.

According to an embodiment of the present invention, the identifier information sent by the mobile host may be encrypted to prevent from being cracked, that is, a background program of the mobile host can encrypt the identifier information by using various encryption algorithms, for example, an advanced encryption standard (Advanced Encryption Standard, AES) algorithm, an RSA encryption algorithm, and the like. Certainly, if the mobile host encrypts the identifier information, the apparatus performs decryption by using a corresponding key after receiving the identifier information.

In this embodiment of the present invention, when a data card is used, the data card does not need to send a binding request to a specified using device, but performs authentication directly by determining whether identifier information sent by a mobile host is consistent with identifier information in the data card. Because the identifier information in this embodiment of the present invention can be used to identify products of the same model or the same batch, the binding between the data card and multiple mobile hosts of the same model or the same batch is implemented.

FIG. 4 is another schematic structural diagram of an apparatus for performing authentication on a bound data card according to an embodiment of the present invention. The apparatus includes a service controlling unit 401, a sending unit 402, a receiving unit 403, a decrypting unit 404, and an authentication unit 405.

The service controlling unit 401 is configured to enable or disable a service function of a data card. The service controlling unit can enable or disable all service functions, and according to needs, the service controlling unit can also enable or disable some service functions. The service controlling unit 401 may disable all or some service functions of the data card when the data card is started after the data card is inserted into a mobile host, and may enable all or some service functions when the authentication on the data card succeeds.

The sending unit 402 is configured to send an authentication request and a random number to the mobile host, and record the value of the random number. In this embodiment of the present invention, to further ensure the security of using the data card, when the data card is inserted into the mobile host, the sending unit 402 sends, to the mobile host, a random number in addition to an authentication request, where the random number may be used in subsequent message authentication. Certainly, in this embodiment of the present invention, after the data card is inserted into the data card, the data card may also send the random number passively according to a request of the mobile host.

The receiving unit 403 is configured to receive a message returned by the mobile host, where the message includes encrypted identifier information and the random number. After receiving the foregoing authentication request, the mobile host encrypts the identifier information and the random number that are sent by the data card, and then sends the identifier information and the random number to the receiving unit 402 in the form of a message. Certainly, the mobile host can encrypt the identifier information and the random together, and can also encrypt the identifier information and the random separately.

The decrypting unit 404 is configured to decrypt the encrypted identifier information and the random number. The decrypting unit 404 can decrypt the encrypted identifier information and random number by using a corresponding key. Because various encryption algorithms can be used for encryption, the key only needs to correspond to an encryption algorithm.

The authentication unit 405 is configured to: perform authentication on the message by using the decrypted random number and the recorded value of the random number; if the authentication succeeds, determine whether the decrypted identifier information is consistent with identifier information in the data card software; if the decrypted identifier information is consistent with the identifier information in the data card software, succeed in the authentication on the data card, whereupon the service controlling unit 401 enables all or some service functions; otherwise, forbid the mobile host to use all or some functions of the data card.

In this embodiment, after the decrypting unit 404 finishes the decryption, the authentication unit 405 firstly compares the decrypted random number with the recorded random number so as to perform authentication on the message and ensure that the message is not a dummy message. Then, the authentication unit 405 determines whether the decrypted identifier information is consistent with the identifier information in the data card software, so as to further ensure the security of data in the data card.

In this embodiment of the present invention, when a data card is used, the data card does not need to send a binding request to a specified using device, but performs authentication directly by determining whether identifier information sent by a mobile host is consistent with identifier information in the data card. Because the identifier information in this embodiment of the present invention can be used to identify products of the same model or the same batch, the binding between the data card and multiple mobile hosts of the same model or the same batch is implemented. In addition, when the data card is used, the random number and identifier information need to be matched in sequence, so that the information in the data card has a higher security level.

FIG. 5 is a schematic structural diagram of a system for performing authentication on a bound data card according to an embodiment of the present invention. The system includes a data card 501 and a mobile host 502. Identifier information used to identify products of the same model or the same batch is included in the mobile host 502. In this embodiment, the data card 501 may include the apparatus illustrated in FIG. 3 or FIG. 4. The apparatus is not further described herein.

In this embodiment of the present invention, when a data card is used, the data card does not need to send a binding request to a specified using device, but performs authentication directly by determining whether identifier information sent by a mobile host is consistent with identifier information in the data card. Because the identifier information in this embodiment of the present invention can be used to identify products of the same model or the same batch, the binding between the data card and multiple mobile hosts of the same model or the same batch is implemented.

According to the description about the embodiments, persons skilled in the art may be fully aware that the present invention may be implemented using software plus necessary generic hardware platform, and definitely may also be implemented by using hardware, but in most cases, the present invention is preferably implemented by using the former method. Based on such understanding, the technical solutions of the present invention essentially, or the part contributing to the prior art may be implemented in the form of a software product. The computer software product is stored in a readable storage medium, for example, a floppy disk, a hard disk, or an optical disk of the computer, and includes several instructions for instructing a computer device (which may be a personal computer, a server, a network device) to perform the methods described in the embodiments of the present invention.

The objectives, technical solutions, and benefits of the present invention are further described in detail in the foregoing specific embodiments. It should be understood that the foregoing descriptions are merely specific embodiments of the present invention, but are not intended to limit the protection scope of the present invention. Any modification, equivalent replacement, or improvement made within the spirit and principle of the present invention shall fall within the protection scope of the present invention.

## Claims

1. A method for performing authentication on a bound data card, comprising:
receiving identifier information sent by a mobile host, wherein the identifier information is used to identify products of the same model or the same batch, and the identifier information is located in an OEM information area of a basic input output system in the mobile host; and
determining whether the identifier information is consistent with identifier information in data card software, and succeeding in authentication on a data card if the identifier information is consistent with the identifier information in the data card software.

2. The method according to claim 1, wherein the receiving identifier information sent by a mobile host comprises: receiving encrypted identifier information sent by the mobile host; and
after the receiving the encrypted identifier information sent by the mobile host, the method further comprises:
a step of decrypting the encrypted identifier information.

3. The method according to claim 2, wherein before the receiving the identifier information sent by the mobile host, the method further comprises:
sending authentication request information to the mobile host.

4. The method according to claim 3, wherein the sending authentication request information to the mobile host comprises: sending an authentication request and a random number to the mobile host, and recording a value of the random number;
the receiving the encrypted identifier information sent by the mobile host comprises:
receiving a message sent by the mobile host that comprises the encrypted identifier information and the random number; and
the decrypting the encrypted identifier information, determining whether the identifier information is consistent with the identifier information in the data card software, and succeeding in the authentication on the data card if the identifier information is consistent with the identifier information in the data card software comprise: decrypting the encrypted identifier information and the random number, and performing authentication on the message by using the decrypted random number and the recorded value of the random number; if the authentication succeeds, determining whether the decrypted identifier information is consistent with the identifier information in the data card software; and if the decrypted identifier information is consistent with the identifier information in the data card software, succeeding in the authentication on the data card.

5. The method according to claim 4, wherein before the sending an authentication request and a random number to the mobile host, the method further includes a step of disabling a service function of the data card; and
after the authentication on the data card succeeds, the method further comprises a step of enabling the service function of the data card.

6. The method according to claim 1, wherein the mobile host is a notebook computer.

7. An apparatus for performing authentication on a bound data card, comprising:
a receiving unit, configured to receive identifier information sent by a mobile host, wherein the identifier information is used to identify products of the same model or the same batch and is located in an OEM information area of a basic input output system in the mobile host; and
an authentication unit, configured to: determine whether the identifier information is consistent with identifier information in data card software; and if the identifier information is consistent with the identifier information in the data card software, succeed in authentication on a data card.

8. The apparatus according to claim 7, wherein the receiving unit is specifically configured to receive encrypted identifier information sent by the mobile host; and
the apparatus further comprises:
a decrypting unit, configured to perform a step of decrypting the encrypted identifier information.

9. The apparatus according to claim 8, further comprising:
a sending unit, configured to send authentication request information to the mobile host.

10. The apparatus according to claim 9, wherein:
the sending unit is further configured to send a random number to the mobile host and record a value of the random number;
the receiving unit is specifically configured to receive a message returned by the mobile host, wherein the message comprises encrypted identifier information and the random number;
the decrypting unit is specifically configured to decrypt the encrypted identifier information and the random number; and
the authentication unit is configured to: perform authentication on the message by using the decrypted random number and the recorded value of the random number; if the authentication succeeds, determine whether the decrypted identifier information is consistent with the identifier information in the data card software; and if the decrypted identifier information is consistent with the identifier information in the data card software, succeed in the authentication on the data card.

11. The apparatus according to claim 10, further comprising:
a service controlling unit, configured to enable or disable a service function of the data card.

12. A system for performing authentication on a bound data card, comprising a data card and a mobile host, wherein an OEM information area of a basic input output system in the mobile host comprises identifier information used to identify products of the same model or the same batch and the data card comprises the apparatus according to any one of claims 7 to 11.
